# EUROPEAN PATENT APPLICATION

(11) **EP 4 818 941 A1**
(43) Date of publication of application: **07.10.2026**
(21) Application number: 26163206.1
(22) Date of filing: 09.03.2026
(51) Int. Cl.: G06F 21/53, G06F 21/62, G06F 16/188

(54) **ENCRYPTED AND INTEGRITY-PROTECTED STORAGE FOR A VIRTUAL MACHINE**

(30) Priority: 31.03.2025 US 202519095883
(71) Applicant: Microsoft Technology Licensing, LLC, Redmond, WA 98052-6399 (US)
(72) Inventor: Wu, Tianrui, Redmond, WA, 98052 (US); Brender, Scott Alan, Redmond, WA, 98052 (US); Shankar, Vinod R., Redmond, WA, 98052 (US); Altobelli, David Kimler, Redmond, WA, 98052 (US); Gordon, Kenneth, Redmond, WA, 98052 (US); Semenko, Alex Mark, Redmond, WA, 98052 (US); Abdullateef, Ahmad, Redmond, WA, 98052-6399 (US); Carey, Omar, Redmond, WA, 98052 (US); Dutta, Aparajita, Redmond, WA, 98052 (US); Das, Rajsekhar, Redmond, WA, 98052 (US); Lin, Jin, Redmond, WA, 98052-6399 (US); Viswanathan, Giridhar, Redmond, WA, 98052-6399 (US); Ebersol, Michael Bishop, Redmond, WA, 98052 (US); Clebsch, Sylvan Wesley, Redmond, WA, 98052 (US); Chagani, Shaheed Gulamabbas, Redmond, WA, 98052 (US); Perez-Vargas, Carolina Cecilia, Redmond, WA, 98052 (US)
(74) Representative: Grünecker Patent- und Rechtsanwälte PartG mbB

(57) **Abstract**

Various embodiments relate to a method implemented in a computer system with a processor system, involving loading a container image as a first read-only filesystem volume for a virtual machine's guest operating system (OS). This includes obtaining a root integrity hash, validating a first hash tree within the container image, and ensuring data integrity. A virtual disk image is loaded as a second read-write filesystem volume, utilizing an ephemeral encryption key stored in the VM's memory. A filesystem is created with encryption and integrity protection features, enabling data encryption and hash-based validation. A third filesystem volume is created as a union of the first and second volumes, directing writes to the second volume. This third volume is exposed as a system volume for the guest OS, ensuring secure and validated data handling within the virtual environment.

## Description

### BACKGROUND

Virtualization technologies have revolutionized the landscape of modern computing by enabling the abstraction of physical hardware resources. This abstraction allows multiple virtual machines (VMs) to run concurrently on a single physical machine, thus promoting maximum resource utilization and providing isolation between different workloads. Modern virtualization technologies are enabled by hypervisors, which create and manage VMs by distributing and controlling the underlying hardware resources. A hypervisor is a software layer (e.g., between the physical hardware and the VMs), ensuring each VM operates independently and securely while efficiently allocating processor, memory, and storage resources among the VMs.

The subject matter claimed herein is not limited to embodiments that solve any disadvantages or that operate only in environments such as those described *supra.* Instead, this background is only provided to illustrate one example technology area where some embodiments described herein may be practiced.

### SUMMARY

In some aspects, the techniques described herein relate to methods, systems, and computer program products, including: loading a container image as a first filesystem volume for use by a guest operating system (OS) of a virtual machine (VM), including: obtaining a root integrity hash that corresponds to the container image; determining that data of the container image has a valid integrity state, including validating a first hash tree stored within the container image based on the root integrity hash; and creating the first filesystem volume as a read-only volume from the container image based on the data of the container image having the valid integrity state; loading a virtual disk image as a second filesystem volume for use by the guest OS, including: generating an ephemeral encryption key, the ephemeral encryption key being stored exclusively within a memory of the VM; creating a filesystem on the virtual disk image, creating the filesystem including: enabling an encryption feature of the filesystem, the encryption feature of the filesystem being configured to encrypt data written to the filesystem based on the ephemeral encryption key; and enabling an integrity protection feature of the filesystem, the integrity protection feature being configured to create a writable second hash tree that stores hashes representing data written to the filesystem; and creating the second filesystem volume as a read-write volume from the filesystem, wherein: when a data block is written to the second filesystem volume, the data block is encrypted based on the ephemeral encryption key, and a hash representing the data block is added to the writable second hash tree; and when the data block is read from the second filesystem volume, the data block is validated using the hash representing the data block; creating a third filesystem volume as a union of the first filesystem volume and the second filesystem volume, wherein writes to the third filesystem volume are directed to the second filesystem volume; and exposing the third filesystem volume as a system volume for the guest OS.

In some aspects, the techniques described herein relate to methods, systems, and computer program products, including: loading a container image as a first filesystem volume for use by a guest OS of a VM, including: obtaining a root integrity hash that corresponds to the container image from a VM firmware layer that executes in a memory context within the VM isolated from the guest OS; determining that data of the container image has a valid integrity state, including validating a first hash tree stored within the container image based on the root integrity hash; and creating the first filesystem volume as a read-only volume from the container image based on the data of the container image having the valid integrity state; loading a virtual disk image as a second filesystem volume for use by the guest OS, including: generating an ephemeral encryption key, the ephemeral encryption key being stored exclusively within a memory of the VM; creating a filesystem on the virtual disk image, creating the filesystem including: enabling an encryption feature of the filesystem, the encryption feature of the filesystem being configured to encrypt data written to the filesystem based on the ephemeral encryption key; and enabling an integrity protection feature of the filesystem, the integrity protection feature being configured to create a writable second hash tree that stores hashes representing data written to the filesystem; and creating the second filesystem volume as a read-write volume from the filesystem, wherein: when a data block is written to the second filesystem volume, the data block is encrypted based on the ephemeral encryption key, and a hash representing the data block is added to the writable second hash tree; and when the data block is read from the second filesystem volume, the data block is validated using the hash representing the data block; creating a third filesystem volume as a union of the first filesystem volume and the second filesystem volume, wherein writes to the third filesystem volume are directed to the second filesystem volume; and exposing the third filesystem volume as a system volume for the guest OS.

In some aspects, the techniques described herein relate to methods, systems, and computer program products, including: loading a plurality of container images as a first filesystem volume for use by a guest OS of a (VM), including: obtaining a plurality of root integrity hashes, each corresponding to a different container image; determining that data of each container image has a valid integrity state, including validating a hash tree stored within each container image based on a corresponding root integrity hash; creating a merged filesystem namespace from the plurality of container images; and creating the first filesystem volume as a read-only volume from the merged filesystem namespace; loading a virtual disk image as a second filesystem volume for use by the guest OS, including: generating an ephemeral encryption key, the ephemeral encryption key being stored exclusively within a memory of the VM; creating a filesystem on the virtual disk image, creating the filesystem including: enabling an encryption feature of the filesystem, the encryption feature of the filesystem being configured to encrypt data written to the filesystem based on the ephemeral encryption key; and enabling an integrity protection feature of the filesystem, the integrity protection feature being configured to create a writable second hash tree that stores hashes representing data written to the filesystem; and creating the second filesystem volume as a read-write volume from the filesystem, wherein: when a data block is written to the second filesystem volume, the data block is encrypted based on the ephemeral encryption key, and a hash representing the data block is added to the writable second hash tree; and when the data block is read from the second filesystem volume, the data block is validated using the hash representing the data block; creating a third filesystem volume as a union of the first filesystem volume and the second filesystem volume, wherein writes to the third filesystem volume are directed to the second filesystem volume; and exposing the third filesystem volume as a system volume for the guest OS.

This Summary introduces a selection of concepts in a simplified form that are further described below in the Detailed Description. This Summary is not intended to identify key features or essential features of the claimed subject matter, nor is it intended to be used to determine the scope of the claimed subject matter.

### BRIEF DESCRIPTION OF THE DRAWINGS

To describe how the advantages of the systems and methods described herein can be obtained, a more particular description of the embodiments briefly described *supra* is rendered by reference to specific embodiments thereof, which are illustrated in the appended drawings. These drawings depict only typical embodiments of the systems and methods described herein and are not, therefore, to be considered to be limiting in their scope. Systems and methods are described and explained with additional specificity and detail through the use of the accompanying drawings, in which:
Figure 1 illustrates an example of a computer architecture that facilitates creating encrypted and integrity-protected storage for a virtual machine (VM);
Figure 2 illustrates an example of creating an encrypted and integrity-protected storage volume for a VM that includes an ephemeral scratch space;
Figure 3 illustrates an example of a Merkle tree used for integrity protecting a storage volume; and
Figure 4 illustrates a flow chart of an example of a method for creating encrypted and integrity-protected storage for a VM.

### DETAILED DESCRIPTION

Despite the advancements in virtualization technologies, there are still challenges in ensuring the security and integrity of storage volumes used by virtual machines (VMs). For example, these methods may rely on static encryption keys stored on disks, which can be compromised if unauthorized entities access the storage medium.

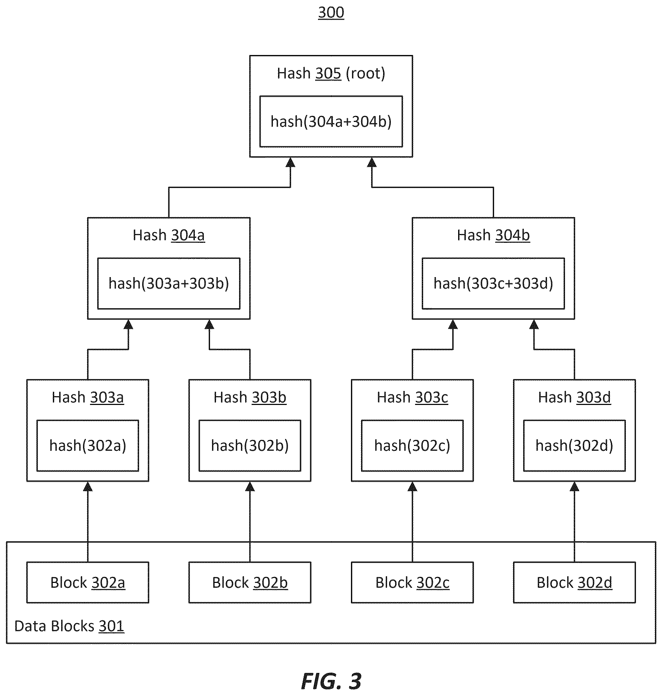

Embodiments described herein ensure the security and integrity of storage volumes used by VMs. These embodiments include systems and methods that create encrypted and integrity-protected storage volumes for VMs. Embodiments include synthesizing a union volume from i) an integrity-verified read-only volume and ii) an encrypted and integrity-verified read-write scratch volume. The read-only volume is formed from one or more "verified" container images (CIMs). Unlike conventional CIMs, a verified CIM (vCIM) includes one or more Merkle trees usable to verify the integrity of the vCIMs' contents. Merkle trees are described in connection with Figure 3, but, in general, they are used to efficiently and securely verify the integrity and consistency of a large dataset by structuring hashes of the dataset into a hierarchical hash-based tree, where each non-leaf node is a hash of its child nodes, ultimately leading to a single root hash that represents the entire dataset. The scratch volume is freshly created for each VM boot and is discarded at VM shutdown. The scratch volume relies on an ephemeral encryption key for encrypting its contents, as well as a writable Merkle tree for integrity verification of its contents. By combining these read-only and read-write volumes into a single union volume, the VM sees a single volume with read-only integrity-verified files from the CIM and encrypted and integrity-protected writable space from the scratch volume.

The technical effects of this solution include enhanced security and integrity of the storage volumes used by VMs. The use of Merkle trees (e.g., a read-only Merkle tree in each vCIM, and a writable Merkle tree in the writable scratch space) ensures that any tampering with data in both the read-only volume and the scratch volume can be detected as the data is read from those volumes, while the use of an ephemeral encryption key to encrypt the writable scratch space provides confidentiality for the writable scratch space that can be rendered inaccessible by discarding the ephemeral encryption key. This architecture ensures that the VM has access to a secure and integrity-protected storage volume, with read-only files from the verified CIMs and writable scratch space that is encrypted and validated for integrity.

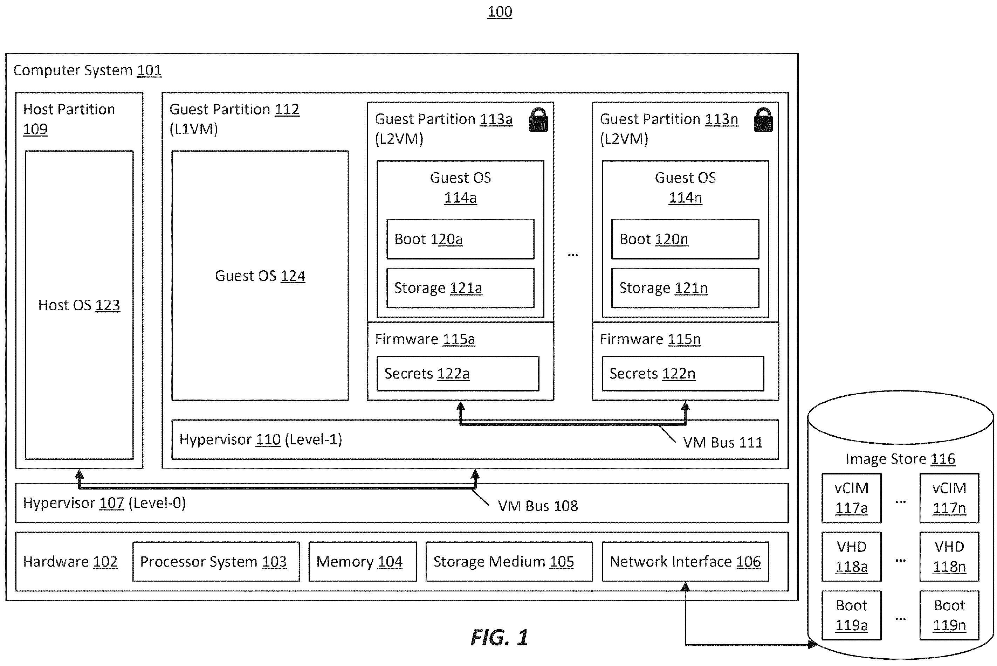

Figure 1 illustrates an example 100 of computer architecture that facilitates creating encrypted and integrity-protected storage for a VM. The architecture includes several components that work together to ensure the security and integrity of the storage used by a VM. As shown in Figure 1, the computer architecture includes a computer system 101 comprising hardware 102. Examples of hardware 102 include a processor system 103 (e.g., a single processor or a plurality of processors), a memory 104 (e.g., system or main memory), a storage medium 105 (e.g., a single computer-readable storage medium, or a plurality of computer-readable storage media), and a network interface 106 (e.g., one or more network interface cards) for interconnecting to one or more other computer systems.

In example 100, a hypervisor 107 executes directly on the computer system's hardware 102 (e.g., a Type-1 or "bare-metal" hypervisor). In alternative examples, however, a hypervisor may execute within an operating system (OS) (e.g., a Type-2 or "hosted" hypervisor). In example 100, the hypervisor 107 partitions hardware resources (e.g., processor system 103, memory 104, I/O resources) among a host partition 109 (alternatively called a root partition), within which a host OS 123 executes, as well as one or more guest partitions (VMs) within which corresponding guest OSs (e.g., guest OS 124) execute. For example, Figure 1 shows that hypervisor 107 creates guest partition 112. The hypervisor 107 may also enable regulated communications between partitions via a VM bus 108. The host OS 123 within host partition 109 manages guest partitions/VMs (e.g., memory management, VM guest lifecycle management, device virtualization) via one or more application program interface (API) calls to the hypervisor 107 via the VM bus 108.

In some environments, known as nested virtualization, a guest partition may execute an additional hypervisor that further subdivides that guest partition's resources among nested guest partitions. For example, in Figure 1, guest partition 112 (a level-1 VM) includes a hypervisor 110 that creates guest partition 113a to guest partition 113n as level-1 VMs, and that may enable regulated communications between partitions using VM bus 111. In this context, hypervisor 107 is referred to as a "level-0" hypervisor, and hypervisor 110 is referred to as a "level-1" hypervisor. In principle, the nesting can proceed to any number of levels; e.g., guest partition 113a could include a hypervisor (e.g., a "level-2" hypervisor) that further subdivides the resources of guest partition 113a. While Figure 1 illustrates an example of nested virtualization for completeness, it is noted that the embodiments described herein are operable whether or not a VM is created by a nested hypervisor (e.g., hypervisor 110) or a bare-metal hypervisor (e.g., hypervisor 107).

In some embodiments, a hypervisor may further divide a partition into different privilege contexts. For instance, in example 100, hypervisor 110 carves out a firmware context (e.g., firmware 115a, firmware 115n) from each of guest partitions 113a-113n, which are indicated by a lock as being confidential VMs whose memory contents may be isolated from guest partition 112 and even a host OS within host partition 109. This firmware context has a different privilege level within its guest partition than the remainder of the guest partition (e.g., which executes a guest OS and applications). In embodiments, a firmware context is a higher privileged context relative to the rest of the guest partition. In these embodiments, a firmware context being a higher privileged context relative to the rest of the guest partition means that the rest of the guest partition is not permitted access to guest partition memory assigned to the firmware context In some examples, however, the firmware context may be permitted to access any guest partition memory.

Some embodiments create different privilege contexts within a guest partition by leveraging second-level address translation (SLAT), e.g., Intel Extended Page Tables and AMD Rapid Virtualization Indexing, to create isolated memory contexts within that guest partition. For example, the HYPER-V hypervisor from MICROSOFT CORPORATION includes virtualization-based security (VBS) technology that relies on SLAT. Using VBS, the HYPER-V hypervisor can divide a partition's memory into different virtual trust levels (VTLs), including, for example, a higher-privileged VTL (e.g., VTL1) and a lower-privileged VTL (e.g., VTL0). In these environments, a guest OS and standard user-mode applications may execute within the lower-privileged VTL (e.g., VTL0). In contrast, VM firmware executes in the higher-privileged VTL (e.g., VTL1) and provides services to the guest OS. Other embodiments may create different privilege contexts within a guest partition using nested virtualization. Additional embodiments are also possible, such as embodiments in which hypervisor 107 creates both a guest partition and its sub-partition(s).

In example 100, the guest partitions 113a-113n rely on data stored in an image store 116 for their operation. For example, image store 116 is illustrated as storing vCIMs (vCIMs 117a-117n), virtual hard disks (VHDs 118a-118n), and boot images (boot images 119a-119n). In embodiments, vCIMs are read-only images that store read-only data accessed by the guest partitions 113a-113n. For example, a given vCIM may store one or more of an OS image, a set of drivers, a set of OS updates, or a set of applications. In embodiments, vCIMs can be merged to form a single filesystem namespace from a plurality of vCIMs. For instance, an OS image vCIM may be merged with an applications vCIM to create a guest partition system volume with a particular guest OS and set of applications. In embodiments, each VHD comprises one or more files used to represent the data blocks of a "virtual disk" by a VM. In some embodiments, each boot image contains the low-level files for booting a guest OS within a guest partition. For example, a boot image may include a Unified Extensible Firmware Interface (UEFI) volume that contains bootloader files.

Referring to guest partitions 113a-113n, each guest partition comprises a corresponding firmware (e.g., firmware 115a-115n) and a corresponding guest OS (e.g., guest OSs 114a-114n). In embodiments, each firmware is sourced from a firmware image stored in storage medium 105 or image store 116. In example 100, each firmware includes secrets (e.g., secrets 122a in firmware 115a and secrets 122n in firmware 115n). In example 100, each guest OS includes a boot component (e.g., boot component 120a in guest OS 114a and boot component 120n in guest OS 114n) and a storage component (e.g., storage component 121a in guest OS 114a and storage component 121n in guest OS 114n).

In example 100, each guest partition (e.g., guest partition 113a) boots from a union of one or more verified container images (vCIMs) (e.g., vCIMs 117a-117n) and a virtual hard disk (VHD 118a). The vCIMs provide a read-only filesystem that includes, for instance, a guest OS (e.g., guest OS 114a) and applications, while the VHD serves as a writable scratch space. The boot process begins with the guest partition's firmware (e.g., firmware 115a) using a boot image (e.g., boot image 119a) and secrets (e.g., secrets 122a) to initiate the execution of a guest OS boot loader (e.g., boot component 120a) stored on the boot image. In some examples, the firmware conveys the secrets to a boot loader via a platform integrity report (e.g., which includes platform measurements, boot settings, and other relevant information to verify the integrity and security of the hardware platform). In various examples, the platform integrity report is an AMD Secure Encrypted Virtualization-Secure Nested Paging (SEV-SNP) hardware report, an INTEL Trust Domain Extensions (TDX) report, or an ARM Confidential Compute Architecture (CCA) report. In embodiments, among other things, the secrets comprise boot configuration data, chain of trust data (e.g., from a trusted platform module), and one or more Merkle root hashes that each corresponds to a vCIM that will be used by the guest partition. The sources of these secrets can vary, but in some examples they are written by host OS 123 to firmware 115a during the provisioning of guest partition 113a, fetched by the firmware from a remote computer system, and/or generated by the firmware itself. In embodiments, the boot loader, when executed, validates the chain of trust data to ensure that it is executing within a valid and trusted computing environment, and that the boot configuration data is valid.

In addition, each guest OS includes a storage component 121 (e.g., storage component 121a-storage component 121a) that synthesizes a union volume as a system volume for the guest partition. The storage component 121 validates that the Merkle root hash(es) received in the secrets correspond to the vCIM(s) associated with the guest partition. If so, the storage component 121 mounts the vCIM(s) as a read-only CIM volume. In addition, the storage component 121 may validate that that Merkle root hash(es) are valid for the VM being operated (e.g., based on a policy embedded into a boot image 119a or passed by the firmware to the guest OS). The storage component 121 also mounts a VHD as a read-write volume and encrypts that volume using an ephemeral key. The storage component 121 then creates a union of the read-only CIM volume and the read-write scratch volume, resulting in a single filesystem volume that the guest partition can use. This union volume provides the guest partition with a secure and integrity-protected storage solution, combining the integrity-verified files from the vCIMs and the encrypted writable space from the VHD.

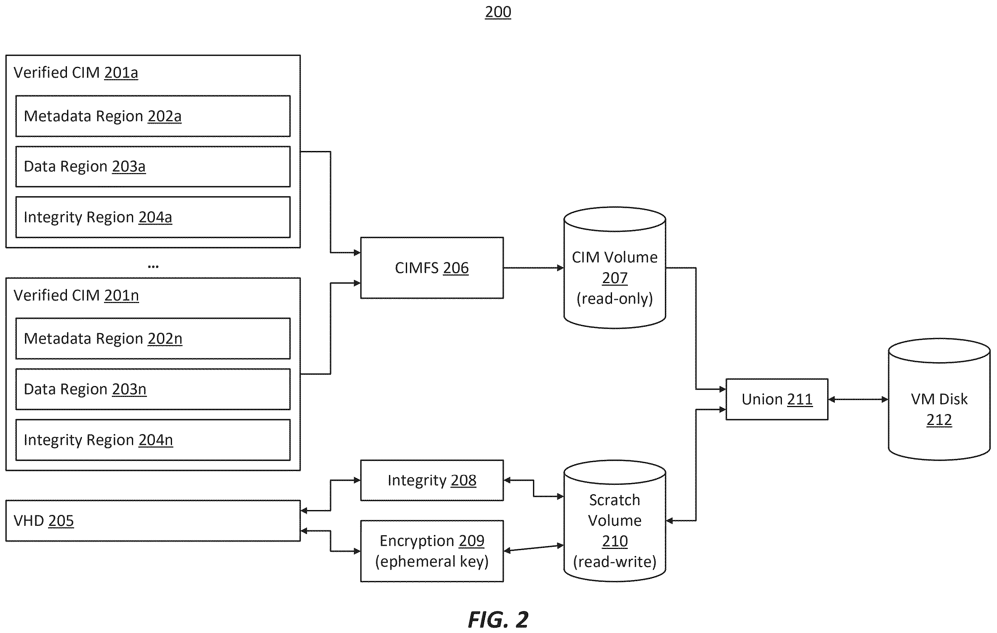

Figure 2 illustrates an example 200 of creating an encrypted and integrity-protected storage volume for a VM that includes an ephemeral scratch space. The process involves using technologies such as UnionFS to synthesize a volume (e.g., VM disk 212) that is a union of a read-only integrity-verified volume (CIM volume 207) and an ephemeral read-write encrypted and integrity-verified volume (e.g., scratch volume 210).

Verified CIM 201a to verified CIM 201n are verified CIMs (e.g., vCIM 117-117n) that form the basis of the CIM volume 207, which, as indicated, is read-only, like the CIMs themselves. Each verified CIM includes several regions, including a metadata region (e.g., metadata region 202a in verified CIM 201a, metadata region 202n in verified CIM 201n), a data region (e.g., data region 203a in verified CIM 201a, data region 203n in verified CIM 201n), and an integrity region (e.g., integrity region 204a in verified CIM 201a, integrity region 204n in verified CIM 201n). Each metadata region stores metadata (e.g., file path, file attributes) about the files contained in a CIM, each data region contains the actual file data (e.g., as data blocks), and each integrity region holds one or more Merkle trees used for integrity verification of the remainder of the CIM (e.g., metadata region 202a, data region 203a).

CIMFS 206 represents a CIM file system that consumes verified CIMs 201a-201n. When the CIMFS 206 mounts each verified CIM, it validates a Merkle tree stored in the CIM's integrity region to ensure that the CIM has an expected Merkle tree. In embodiments, this validation process involves comparing the root hash of the CIM's Merkle tree with an expected root hash for the CIM, e.g., as provided by the VM's firmware layer as boot configuration information.

After validating and mounting each CIM, CIMFS 206 merges these CIMs' filesystem namespaces into a single logical CIM volume 207. In embodiments, the files on CIM volume 207 represent an OS image and applications-whose contents do not need to change during VM operations. In embodiments, CIMFS 206 ensures the integrity of each block read via CIM volume 207 by validating each block against a Merkle tree of an underlying CIM on-the-fly during the read operations. In these embodiments, if a block fails an integrity check, one or more remedial actions are taken, such as blocking the read operation, logging the failure, raising an alert, and/or stopping the VM. In some embodiments, CIMFS 206 may refrain from integrity checks of read blocks. For example, CIMFS 206 may rely solely on validating a CIM's Merkle root hash for validating the CIM, may only integrity check a block the first time it is read after the CIM is mounted, may only periodically integrity check blocks (e.g., every n reads), may only integrity check blocks if disk I/O and/or processor utilization are below given thresholds, or any combination thereof.

VHD 205 represents a virtual hard disk used to store a scratch volume 210, which, as indicated, is read-write. In embodiments, the scratch volume 210 is freshly created for each VM boot and discarded at VM shutdown. In embodiments, a storage stack used for scratch volume 210 provides at least two security features: integrity protection (integrity component 208) and full disk encryption (encryption component 209). In some embodiments, integrity protection and full disk encryption are provided by a filesystem, such as Resilient File System (ReFS), ZFS, or Btrfs.

In embodiments, integrity component 208 creates a writable Merkle tree that stores hashes representing the data written to the scratch volume 210. This ensures that any data read from the volume can be validated against its hash. In embodiments, encryption component 209 uses an ephemeral key, generated exclusively for that VM's boot session, to encrypt all data written to scratch volume 210, providing confidentiality of the data written. In embodiments, this encryption key is stored exclusively within the VM's memory. In embodiments, scratch volume 210 serves as the writable scratch space for the VM, where temporary data can be stored, and it is discarded at VM shutdown by discarding the ephemeral key, ensuring that no data persists between VM sessions.

A union component 211 creates a union of the read-only CIM volume 207 and the read-write scratch volume 210, e.g., using UnionFS. This union, shown as VM disk 212, is a single volume that the VM can use, with read-only files from the CIM volume 207 and writable space from the scratch volume 210. Writes to VM disk 212 are directed to the scratch volume 210, while reads can come from either volume depending on the file's location. The VM disk 212 is the final disk exposed to the VM, e.g., as the VM's system volume.

The VM disk 212, being made up of the combined read-only and read-write volumes, provides the VM with a secure and integrity-protected storage solution. This architecture ensures that the VM has access to a secure and integrity-protected storage volume, with read-only files from the verified CIMs and writable scratch space that is encrypted and validated for integrity.

Figure 3 illustrates an example 300 of a Merkle tree used for integrity protecting a storage volume, including using the Merkle tree to validate the contents of block-based CIMs (e.g., vCIMs 117a-117n) or block-based filesystems (e.g., those stored on VHDs 118a-118n). As shown, the Merkle tree is a hierarchical data structure that enables efficient and secure data integrity verification. In this context, the Merkle tree is used to ensure the integrity of each data block in a set of data blocks.

In example 300, the Merkle tree is derived from a set of data blocks, labeled as data blocks 301, such as the data blocks of a block-based CIM. Each data block, such as block 302a, block 302b, block 302c, and block 302d, is processed through the same hash function to generate a corresponding hash value. For instance, block 302a is hashed to produce hash 303a, block 302b is hashed to produce hash 303b, block 302c is hashed to produce hash 303c, and block 302d is hashed to produce hash 303d. These hash values serve as the leaf nodes of the Merkle tree.

The next level of the Merkle tree involves combining pairs of hash values from two child nodes to generate new ones. Specifically, hash 303a and hash 303b are combined and hashed to produce hash 304a, while hash 303c and hash 303d are combined and hashed to produce hash 304b. This process of combining and hashing continues until a single hash value, known as the root hash, is obtained. In this example, hash 304a and hash 304b are combined and hashed to produce the root hash 305.

The root hash 305 serves as a compact representation of the entire data set (data blocks 301) and can be used to verify the integrity of the data blocks. To validate the contents of a specific data block, one can recompute the hash values along the path from the data block to the root hash and compare the computed root hash with the stored root hash. If the computed root hash matches the stored root hash, the data block is considered valid and unaltered. This hierarchical hashing mechanism ensures that any modification to a data block will result in a different root hash, thereby enabling the detection of data tampering.

Examples of hash functions include error-detecting functions like cyclic redundancy check (CRC) or cryptographic functions like Secure Hash Algorithm 2 (SHA2). A Merkle tree utilizing error-detecting hash functions are appropriate for integrity verification (e.g., ensuring the contents of an image reflect the state they were in when a root hash was generated), while a Merkle tree utilizing error-detecting hash functions cryptographic hash functions are also appropriate for both integrity verification and authentication (e.g., ensuring a particular entity wrote the contents of an image).

In the context of validating block-based image and filesystems, the Merkle tree provides a robust and efficient method for ensuring data integrity. By leveraging the cryptographic properties of hash functions and the hierarchical structure of the Merkle tree, it is possible to detect and prevent unauthorized modifications to the disk image, thereby enhancing the security and reliability of the storage system.

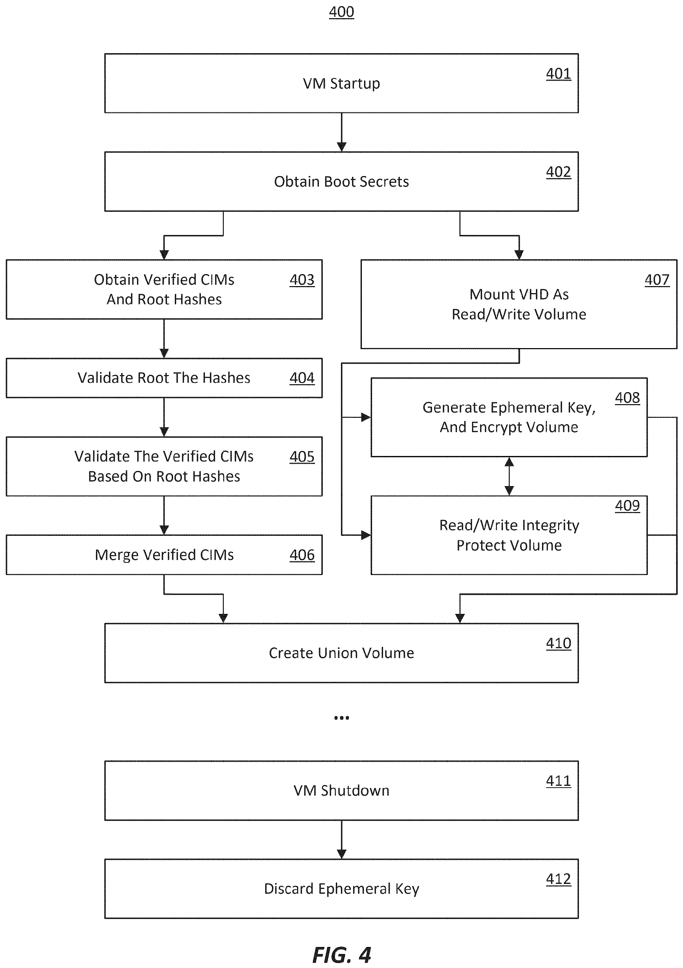

Embodiments are now described in connection with Figure 4, which illustrates a flow chart of an example method 400 for creating encrypted and integrity-protected storage for a VM. In embodiments, instructions for implementing method 400 are encoded as computer-executable instructions (e.g., guest OS 114a, guest OS 114n) stored on a computer storage medium (e.g., storage medium 105, image store 116) that are executable by a processor (e.g., processor system 103) to cause a computer system (e.g., computer system 101) to perform method 400.

The following discussion now refers to a method and method acts. Although the method acts are discussed in specific orders or are illustrated in a flow chart as occurring in a particular order, no order is required unless expressly stated or required because an act is dependent on another act being completed before the act is performed.

Referring to Figure 4, the method 400 begins at act 401, VM startup. For example, the startup of guest partition 113a or guest OS 114a initiates method 400 at the guest partition. After VM startup, the method includes act 402 of obtaining boot secrets, including one or more Merkle root hashes for the vCIM(s) that will be used for the VM's system volume. In embodiments, act 402 involves obtaining boot secrets from a VM firmware layer. For example, the firmware 115a provides secrets 122a needed for the boot process to a guest OS boot loader.

After obtaining boot secrets, the method branches to acts 403-406 or acts 407-409. In general, acts 403-406 load a container image as a read-only filesystem volume for use by a guest OS of the VM, while acts 407-409 load a virtual disk image as a read-write filesystem volume for use by the guest OS. These paths can be performed in any serial or parallel order.

Loading a container image as a read-only filesystem volume includes act 403 of obtaining verified CIMs and root hashes. In some embodiments, act 403 comprises obtaining a root integrity hash that corresponds to the container image. For example, the VM firmware layer provides root integrity hashes corresponding to one or more of container images 117a-117n.

In act 404, the method validates the root hashes. For example, the storage component 121a verifies the root integrity hashes to ensure they are correct for the VM (e.g., based on a policy).

In act 405, the method validates the verified CIMs based on the root hashes. In some embodiments, act 405 comprises determining that data of the container image has a valid integrity state, including validating a hash tree stored within the container image based on the root integrity hash. For example, the storage component 121a validates the Merkle root hashes received in act 403 correspond to the Merkle trees stored within one or more of container images 117a-117n.

In act 406, the method merges the verified CIMs. For example, the CIMFS 206 merges the filesystem namespaces of the validated container images into a single logical CIM volume 207.

Loading a virtual disk image as a read-write filesystem volume includes act 407 of mounting the virtual disk image as a read/write volume. For example, the VHD 118a mounts as a writable scratch volume 210.

Act 408 involves generating an ephemeral key and encrypting the volume. For example, an ephemeral encryption key is generated and used to encrypt the scratch volume 210.

In act 409, the method provides read/write integrity protection for the volume. For example, the integrity component 208 creates a writable Merkle tree that stores hashes representing the data written to the scratch volume 210.

After loading the container image as a read-only filesystem volume and the virtual disk image as a read-write filesystem volume, the method includes act 410 of creating a union volume. For example, the union component 211 creates a union of the read-only CIM volume 207 and the read-write scratch volume 210, e.g., using UnionFS, resulting in the VM disk 212.

The union volume is exposed as a system volume for the guest OS. For example, the VM disk 212 is exposed to the guest OS 114a as its system volume.

As noted, the boot loader and/or guest OS stores the ephemeral encryption key exclusively within VM memory. As shown, after operating the VM utilizing the union volume created in act 410, the method includes, after initiating a VM shutdown at act 411, an act 412 of discarding the ephemeral key (e.g., based on the destruction of the VM's memory, based on expressly overwriting the ephemeral key within the VM's memory). Encrypting the scratch volume (second filesystem volume) using this ephemeral encryption key means that the scratch volume becomes inaccessible after discarding the ephemeral encryption key. Thus, any data stored to the scratch volume by the VM during its operation becomes effectively inaccessible.

Embodiments therefore relate to a method implemented in a computer system with a processor system, involving loading a container image as a first read-only filesystem volume for a virtual machine's guest OS. This includes obtaining a root integrity hash, validating a first hash tree within the container image, and ensuring data integrity. A virtual disk image is loaded as a second read-write filesystem volume, utilizing an ephemeral encryption key stored in the VM's memory. A filesystem is created with encryption and integrity protection features, enabling data encryption and hash-based validation. A third filesystem volume is created as a union of the first and second volumes, directing writes to the second volume. This third volume is exposed as a system volume for the guest OS, ensuring secure and validated data handling within the virtual environment.

Alternatively, or in addition to the other examples described herein, examples include any combination of the following:
Clause 1. A method implemented in a computer system that includes a processor system, comprising: loading a container image as a first filesystem volume for use by a guest operating system (OS) of a virtual machine (VM), including: obtaining a root integrity hash that corresponds to the container image; determining that data of the container image has a valid integrity state, including validating a first hash tree stored within the container image based on the root integrity hash; and creating the first filesystem volume as a read-only volume from the container image based on the data of the container image having the valid integrity state; loading a virtual disk image as a second filesystem volume for use by the guest OS, including: generating an ephemeral encryption key, the ephemeral encryption key being stored exclusively within a memory of the VM; creating a filesystem on the virtual disk image, creating the filesystem including: enabling an encryption feature of the filesystem, the encryption feature of the filesystem being configured to encrypt data written to the filesystem based on the ephemeral encryption key; and enabling an integrity protection feature of the filesystem, the integrity protection feature being configured to create a writable second hash tree that stores hashes representing data written to the filesystem; and creating the second filesystem volume as a read-write volume from the filesystem, wherein: when a data block is written to the second filesystem volume, the data block is encrypted based on the ephemeral encryption key, and a hash representing the data block is added to the writable second hash tree; and when the data block is read from the second filesystem volume, the data block is validated using the hash representing the data block; creating a third filesystem volume as a union of the first filesystem volume and the second filesystem volume, wherein writes to the third filesystem volume are directed to the second filesystem volume; and exposing the third filesystem volume as a system volume for the guest OS.
Clause 2. The method of clause 1, wherein the method further comprises validating that the root integrity hash is a valid root integrity hash for the VM.
Clause 3. The method of any of clause 1 or 2, wherein the first hash tree is a Merkle tree, and the root integrity hash is stored at a root of the first hash tree.
Clause 4. The method of any of clause 1 to 3, wherein the writable second hash tree is a Merkle hash tree.
Clause 5. The method of clause 4, wherein the writable second hash tree stores hashes generated from a cryptographic hash function.
Clause 6. The method of any of clause 1 to 5, wherein the container image is a first container image, and the method further comprises: loading a second container image; and merging the second container image and the first container image when creating the first filesystem volume.
Clause 7. The method of clause 6, wherein the root integrity hash is a first root integrity hash, and method further comprises: obtaining a second root integrity hash that corresponds to the second container image; and determining that data of the second container image has a valid integrity state, including validating a third hash tree stored within the second container image based on the second root integrity hash.
Clause 8. The method of any of clause 1 to 7, wherein the method further comprises validating boot configuration data.
Clause 9. The method of any of clause 1 to 8, wherein obtaining the root integrity hash comprises obtaining the root integrity hash from a VM firmware layer.
Clause 10. The method of clause 9, wherein the VM firmware layer executes in a memory context within the VM isolated from the guest OS.
Clause 11. The method of any of clause 1 to 10, wherein the container image is a block-based container image.
Clause 12. A computer system, comprising: a processor system; and a computer storage medium that stores computer-executable instructions that are executable by the processor system to at least: load a container image as a first filesystem volume for use by a guest operating system (OS) of a virtual machine (VM), including: obtaining a root integrity hash that corresponds to the container image from a VM firmware layer that executes in a memory context within the VM isolated from the guest OS; determining that data of the container image has a valid integrity state, including validating a first hash tree stored within the container image based on the root integrity hash; and creating the first filesystem volume as a read-only volume from the container image based on the data of the container image having the valid integrity state; load a virtual disk image as a second filesystem volume for use by the guest OS, including: generating an ephemeral encryption key, the ephemeral encryption key being stored exclusively within a memory of the VM; creating a filesystem on the virtual disk image, creating the filesystem including: enabling an encryption feature of the filesystem, the encryption feature of the filesystem being configured to encrypt data written to the filesystem based on the ephemeral encryption key; and enabling an integrity protection feature of the filesystem, the integrity protection feature being configured to create a writable second hash tree that stores hashes representing data written to the filesystem; and creating the second filesystem volume as a read-write volume from the filesystem, wherein: when a data block is written to the second filesystem volume, the data block is encrypted based on the ephemeral encryption key, and a hash representing the data block is added to the writable second hash tree; and when the data block is read from the second filesystem volume, the data block is validated using the hash representing the data block; create a third filesystem volume as a union of the first filesystem volume and the second filesystem volume, wherein writes to the third filesystem volume are directed to the second filesystem volume; and expose the third filesystem volume as a system volume for the guest OS.
Clause 13. The computer system of clause 12, wherein the first hash tree is a Merkle tree, and the root integrity hash is stored at a root of the first hash tree.
Clause 14. The computer system of any of clause 12 or 13, wherein the writable second hash tree is a Merkle hash tree.
Clause 15. The computer system of clause 14, wherein the writable second hash tree stores hashes generated from a cryptographic hash function.
Clause 16. The computer system of any of clause 12 to 15, wherein the container image is a first container image, the root integrity hash is a first root integrity hash, the computer-executable instructions are also executable by the processor system to: load a second container image, including: obtaining a second root integrity hash that corresponds to the second container image; and determining that data of the second container image has a valid integrity state, including validating a third hash tree stored within the second container image based on the second root integrity hash; and merge the second container image and the first container image when creating the first filesystem volume.
Clause 17. The computer system of any of clause 12 to 16, wherein the container image is a block-based container image.
Clause 18. A computer storage medium that stores computer-executable instructions that are executable by a processor system to at least: load a plurality of container images as a first filesystem volume for use by a guest operating system (OS) of a virtual machine (VM), including: obtaining a plurality of root integrity hashes, each corresponding to a different container image; determining that data of each container image has a valid integrity state, including validating a hash tree stored within each container image based on a corresponding root integrity hash; creating a merged filesystem namespace from the plurality of container images; and creating the first filesystem volume as a read-only volume from the merged filesystem namespace; load a virtual disk image as a second filesystem volume for use by the guest OS, including: generating an ephemeral encryption key, the ephemeral encryption key being stored exclusively within a memory of the VM; creating a filesystem on the virtual disk image, creating the filesystem including: enabling an encryption feature of the filesystem, the encryption feature of the filesystem being configured to encrypt data written to the filesystem based on the ephemeral encryption key; and enabling an integrity protection feature of the filesystem, the integrity protection feature being configured to create a writable second hash tree that stores hashes representing data written to the filesystem; and creating the second filesystem volume as a read-write volume from the filesystem, wherein: when a data block is written to the second filesystem volume, the data block is encrypted based on the ephemeral encryption key, and a hash representing the data block is added to the writable second hash tree; and when the data block is read from the second filesystem volume, the data block is validated using the hash representing the data block; create a third filesystem volume as a union of the first filesystem volume and the second filesystem volume, wherein writes to the third filesystem volume are directed to the second filesystem volume; and expose the third filesystem volume as a system volume for the guest OS.
Clause 19. The computer storage medium of clause 18, wherein each hash tree is a Merkle tree.
Clause 20. The computer storage medium of any of clause 18 or 19, wherein the writable second hash tree stores hashes generated from a cryptographic hash function.

Embodiments of the disclosure comprise or utilize a special-purpose or general-purpose computer system (e.g., computer system 101) that includes computer hardware, such as, for example, a processor system (e.g., processor system 103) and system memory (e.g., memory 104), as discussed in greater detail below. Embodiments within the scope of the present disclosure also include physical and other computer-readable media for carrying or storing computer-executable instructions and/or data structures. Such computer-readable media can be any available media accessible by a general-purpose or special-purpose computer system. Computer-readable media that store computer-executable instructions and/or data structures are computer storage media (e.g., storage medium 105). Computer-readable media that carry computer-executable instructions and/or data structures are transmission media. Thus, embodiments of the disclosure can comprise at least two distinctly different kinds of computer-readable media: computer storage media and transmission media.

Computer storage media are physical storage media that store computer-executable instructions and/or data structures. Physical storage media include computer hardware, such as random access memory (RAM), read-only memory (ROM), electrically erasable programmable ROM (EEPROM), solid state drives (SSDs), flash memory, phase-change memory (PCM), optical disk storage, magnetic disk storage or other magnetic storage devices, or any other hardware storage device(s) which store program code in the form of computer-executable instructions or data structures, which can be accessed and executed by a general-purpose or special-purpose computer system to implement the disclosed functionality.

Transmission media include a network and/or data links that carry program code in the form of computer-executable instructions or data structures that are accessible by a general-purpose or special-purpose computer system. A "network" is defined as a data link that enables the transport of electronic data between computer systems and other electronic devices. When information is transferred or provided over a network or another communications connection (either hardwired, wireless, or a combination thereof) to a computer system, the computer system may view the connection as transmission media. The scope of computer-readable media includes combinations thereof.

Upon reaching various computer system components, program code in the form of computer-executable instructions or data structures can be transferred automatically from transmission media to computer storage media (or vice versa). For example, computer-executable instructions or data structures received over a network or data link can be buffered in RAM within a network interface module (e.g., network interface 106) and eventually transferred to computer system RAM and/or less volatile computer storage media at a computer system. Thus, computer storage media can be included in computer system components that also utilize transmission media.

Computer-executable instructions comprise, for example, instructions and data which when executed at a processor system, cause a general-purpose computer system, a special-purpose computer system, or a special-purpose processing device to perform a function or group of functions. In embodiments, computer-executable instructions comprise binaries, intermediate format instructions (e.g., assembly language), or source code. In embodiments, a processor system comprises one or more central processing units (CPUs), one or more graphics processing units (GPUs), one or more neural processing units (NPUs), and the like.

In some embodiments, the disclosed systems and methods are practiced in network computing environments with many types of computer system configurations, including personal computers, desktop computers, laptop computers, message processors, hand-held devices, multi-processor systems, microprocessor-based or programmable consumer electronics, network PCs, minicomputers, mainframe computers, mobile telephones, PDAs, tablets, pagers, routers, switches, and the like. In some embodiments, the disclosed systems and methods are practiced in distributed system environments where different computer systems, which are linked through a network (e.g., by hardwired data links, wireless data links, or by a combination of hardwired and wireless data links), both perform tasks. As such, in a distributed system environment, a computer system may include a plurality of constituent computer systems. Program modules may be located in local and remote memory storage devices in a distributed system environment.

In some embodiments, the disclosed systems and methods are practiced in a cloud computing environment. In some embodiments, cloud computing environments are distributed, although this is not required. When distributed, cloud computing environments may be distributed internally within an organization and/or have components possessed across multiple organizations. In this description and the following claims, "cloud computing" is a model for enabling on-demand network access to a shared pool of configurable computing resources (e.g., networks, servers, storage, applications, and services). A cloud computing model can be composed of various characteristics, such as on-demand self-service, broad network access, resource pooling, rapid elasticity, measured service, and so forth. A cloud computing model may also come in the form of various service models such as Software as a Service (SaaS), Platform as a Service (PaaS), Infrastructure as a Service (laaS), etc. The cloud computing model may also be deployed using different deployment models such as private cloud, community cloud, public cloud, hybrid cloud, etc.

Some embodiments, such as a cloud computing environment, comprise a system with one or more hosts capable of running one or more virtual machines (VMs). During operation, VMs emulate an operational computing system, supporting an operating system (OS) and perhaps one or more other applications. In some embodiments, each host includes a hypervisor that emulates virtual resources for the VMs using physical resources that are abstracted from the view of the VMs. The hypervisor also provides proper isolation between the VMs. Thus, from the perspective of any given VM, the hypervisor provides the illusion that the VM is interfacing with a physical resource, even though the VM only interfaces with the appearance (e.g., a virtual resource) of a physical resource. Examples of physical resources include processing capacity, memory, disk space, network bandwidth, media drives, and so forth.

Although the subject matter has been described in language specific to structural features and/or methodological acts, it is to be understood that the subject matter defined in the appended claims is not necessarily limited to the described features or acts described supra or the order of the acts described supra. Rather, the described features and acts are disclosed as example forms of implementing the claims.

The present disclosure may be embodied in other specific forms without departing from its essential characteristics. The described embodiments are only illustrative and not restrictive. All changes that come within the meaning and range of equivalency of the claims are to be embraced within their scope.

When introducing elements in the appended claims, the articles "a," "an," "the," and "said" are intended to mean there are one or more of the elements. The terms "comprising," "including," and "having" are intended to be inclusive and mean that there may be additional elements other than the listed elements. Unless otherwise specified, the terms "set," "superset," and "subset" are intended to exclude an empty set, and thus "set" is defined as a non-empty set, "superset" is defined as a non-empty superset, and "subset" is defined as a non-empty subset. Unless otherwise specified, the term "subset" excludes the entirety of its superset (i.e., the superset contains at least one item not included in the subset). Unless otherwise specified, a "superset" can include at least one additional element, and a "subset" can exclude at least one element.

## Claims

1. A method implemented in a computer system that includes a processor system, comprising:
loading a container image as a first filesystem volume for use by a guest operating system (OS) of a virtual machine (VM), including:
obtaining a root integrity hash that corresponds to the container image;
determining that data of the container image has a valid integrity state, including validating a first hash tree stored within the container image based on the root integrity hash; and
creating the first filesystem volume as a read-only volume from the container image based on the data of the container image having the valid integrity state;
loading a virtual disk image as a second filesystem volume for use by the guest OS, including:
generating an ephemeral encryption key, the ephemeral encryption key being stored exclusively within a memory of the VM;
creating a filesystem on the virtual disk image, creating the filesystem including:
enabling an encryption feature of the filesystem, the encryption feature of the filesystem being configured to encrypt data written to the filesystem based on the ephemeral encryption key; and
enabling an integrity protection feature of the filesystem, the integrity protection feature being configured to create a writable second hash tree that stores hashes representing data written to the filesystem; and
creating the second filesystem volume as a read-write volume from the filesystem, wherein:
when a data block is written to the second filesystem volume, the data block is encrypted based on the ephemeral encryption key, and a hash representing the data block is added to the writable second hash tree; and
when the data block is read from the second filesystem volume, the data block is validated using the hash representing the data block;
creating a third filesystem volume as a union of the first filesystem volume and the second filesystem volume, wherein writes to the third filesystem volume are directed to the second filesystem volume; and
exposing the third filesystem volume as a system volume for the guest OS.

2. The method of claim 1, at least one of:
wherein the method further comprises validating that the root integrity hash is a valid root integrity hash for the VM; and
wherein the first hash tree is a Merkle tree, and the root integrity hash is stored at a root of the first hash tree.

3. The method of claim 1 or 2, wherein the writable second hash tree is a Merkle hash tree.

4. The method of claim 3, wherein the writable second hash tree stores hashes generated from a cryptographic hash function.

5. The method of one of claims 1 to 4, wherein the container image is a first container image, and the method further comprises:
loading a second container image; and
merging the second container image and the first container image when creating the first filesystem volume.

6. The method of claim 5, wherein the root integrity hash is a first root integrity hash, and method further comprises:
obtaining a second root integrity hash that corresponds to the second container image; and
determining that data of the second container image has a valid integrity state, including validating a third hash tree stored within the second container image based on the second root integrity hash.

7. The method of one of claims 1 to 6, at least one of:
wherein the method further comprises validating boot configuration data;
wherein obtaining the root integrity hash comprises obtaining the root integrity hash from a VM firmware layer, preferably wherein the VM firmware layer executes in a memory context within the VM isolated from the guest OS; and
wherein the container image is a block-based container image.

8. A computer system, comprising:
a processor system; and
a computer storage medium that stores computer-executable instructions that are executable by the processor system to at least:
load a container image as a first filesystem volume for use by a guest operating system (OS) of a virtual machine (VM), including:
obtaining a root integrity hash that corresponds to the container image from a VM firmware layer that executes in a memory context within the VM isolated from the guest OS;
determining that data of the container image has a valid integrity state, including validating a first hash tree stored within the container image based on the root integrity hash; and
creating the first filesystem volume as a read-only volume from the container image based on the data of the container image having the valid integrity state;
load a virtual disk image as a second filesystem volume for use by the guest OS, including:
generating an ephemeral encryption key, the ephemeral encryption key being stored exclusively within a memory of the VM;
creating a filesystem on the virtual disk image, creating the filesystem including:
enabling an encryption feature of the filesystem, the encryption feature of the filesystem being configured to encrypt data written to the filesystem based on the ephemeral encryption key; and
enabling an integrity protection feature of the filesystem, the integrity protection feature being configured to create a writable second hash tree that stores hashes representing data written to the filesystem; and
creating the second filesystem volume as a read-write volume from the filesystem, wherein:
when a data block is written to the second filesystem volume, the data block is encrypted based on the ephemeral encryption key, and a hash representing the data block is added to the writable second hash tree; and
when the data block is read from the second filesystem volume, the data block is validated using the hash representing the data block;
create a third filesystem volume as a union of the first filesystem volume and the second filesystem volume, wherein writes to the third filesystem volume are directed to the second filesystem volume; and
expose the third filesystem volume as a system volume for the guest OS.

9. The computer system of claim 8, wherein the first hash tree is a Merkle tree, and the root integrity hash is stored at a root of the first hash tree.

10. The computer system of claim 8 or 9, wherein the writable second hash tree is a Merkle hash tree.

11. The computer system of claim 10, wherein the writable second hash tree stores hashes generated from a cryptographic hash function.

12. The computer system of one of claims 8 to 11, wherein the container image is a first container image, the root integrity hash is a first root integrity hash, the computer-executable instructions are also executable by the processor system to:
load a second container image, including:
obtaining a second root integrity hash that corresponds to the second container image; and
determining that data of the second container image has a valid integrity state, including validating a third hash tree stored within the second container image based on the second root integrity hash; and
merge the second container image and the first container image when creating the first filesystem volume.

13. The computer system of one of claims 8 to 12, wherein the container image is a block-based container image.

14. A computer storage medium that stores computer-executable instructions that are executable by a processor system to at least:
load a plurality of container images as a first filesystem volume for use by a guest operating system (OS) of a virtual machine (VM), including:
obtaining a plurality of root integrity hashes, each corresponding to a different container image;
determining that data of each container image has a valid integrity state, including validating a hash tree stored within each container image based on a corresponding root integrity hash;
creating a merged filesystem namespace from the plurality of container images; and
creating the first filesystem volume as a read-only volume from the merged filesystem namespace;
load a virtual disk image as a second filesystem volume for use by the guest OS, including:
generating an ephemeral encryption key, the ephemeral encryption key being stored exclusively within a memory of the VM;
creating a filesystem on the virtual disk image, creating the filesystem including:
enabling an encryption feature of the filesystem, the encryption feature of the filesystem being configured to encrypt data written to the filesystem based on the ephemeral encryption key; and
enabling an integrity protection feature of the filesystem, the integrity protection feature being configured to create a writable second hash tree that stores hashes representing data written to the filesystem; and
creating the second filesystem volume as a read-write volume from the filesystem, wherein:
when a data block is written to the second filesystem volume, the data block is encrypted based on the ephemeral encryption key, and a hash representing the data block is added to the writable second hash tree; and
when the data block is read from the second filesystem volume, the data block is validated using the hash representing the data block;
create a third filesystem volume as a union of the first filesystem volume and the second filesystem volume, wherein writes to the third filesystem volume are directed to the second filesystem volume; and
expose the third filesystem volume as a system volume for the guest OS.

15. The computer storage medium of claim 14, at least one of:
wherein each hash tree is a Merkle tree; and
wherein the writable second hash tree stores hashes generated from a cryptographic hash function.
